Europäisches Patentamt

European Patent Office

Office européen des brevets

(11) Publication number: **0 130 280**
**A2**

## (12) EUROPEAN PATENT APPLICATION

(21) Application number: **84103377.2**

(22) Date of filing: **28.03.84**

(51) Int. Cl.⁴: **B 60 K 41/04**

(30) Priority: **05.04.83 US 482205**

(43) Date of publication of application: **09.01.85**
**Bulletin 85/2**

(84) Designated Contracting States: **AT BE CH DE FR GB IT LI LU NL SE**

(71) Applicant: **Chou, Lung-Hsing, No. 254, Cheng Kung Road Section 2, Nei Hu Taipei, 114 (TW)**
Applicant: **Chou, Lung-Chiao, No. 254, Cheng Kung Road Section 2, Nei Hu Taipei, 114 (TW)**

(72) Inventor: **Chou, Lung-Hsing, No. 254, Cheng Kung Road Section 2, Nei Hu Taipei, 114 (TW)**
Inventor: **Chou, Lung-Chiao, No. 254, Cheng Kung Road Section 2, Nei Hu Taipei, 114 (TW)**

(74) Representative: **Dickel, Klaus, Dipl.-Ing. et al, Julius-Kreis-Strasse 33, D-8000 München 60 (DE)**

(54) **Automobile transmission.**

(57) A disk displacement no-shift speeder device, comprising displaceable transmission disk, Link, one-way rotation wheel and recipient shaft sleeves, characteristic in that when the vehicle Engine is set to rotation, the vacuum suction as produced mechanically by the Engine will be turned to control a power recovery clutch which will in turn bring a compressor to yield air pressures for storage in a storage vessel for conversion into a pneumatic system which will be controlled to determine the deviation expected of the transmission disk to achieve in gear-shifting and the save of fuel energies by having information signals covering those from the Acceleration Detector, the detector provided on the transmission disk, the travelling speed Detector sent to a Microprocessor for evaluation processing.

—1—

TITLE MODIFIED
see front page

Title of the invention:

Disk Displacement No-shift Speeder

Summary of the invention:

The present invention provides for a Disk Displacement No-Shift Speeder device, characteristically it means to achieve in a timely control of the pneumatic systems by means of a micro-computerized processing of factors such as Engine Rotation Speeds, travelling speeds, Acceleration conditions plus gear shifting status quo by transmission of the Disk by virtue of the Displacement as accomplished, such that the cone gear set will follow up in transmission accordingly so that Blocks will be driven to determine the extent to which the Disk is to be set to displacement so as to rotate about the main axis of the Engine so as to carry the Disk to exert a push upon the Links, to follow that, a one-way wheel will produce a push against the affected shaft sleeve thereby the Engine momentum is discharged, and that as the travelling speed of the vehicle provided accordingly reaches a certain rate, the micro-processor will function again to stop the indirect transmission by the eccentric displacement of the Disk and in the meantime to have the transmission momentum delivered straight by the Main Shaft of the Engine thus achieving in a substantial save of the fuels consumable due to gear-shifting and variation in speed as a result

-2-

thereof as a vehicle is travelling en route, and in the meanwhile, the shocks to be produced during a gear-shifting performance will be eliminated accordingly.

Brief description of the drawings:

Fig. 1-A is a three-dimensional perspective of the present invention titled Disk Displacement No-Shift Speeder in one execution;

Fig. 1-B is a sectionwise view of the present invention titled Disk Displacement No-Shift Speeder in the same execution;

Fig. 2-A is a three-dimensional perspective of the present invention titled Disk Displacement No-Shift Speeder in another execution;

Fig. 2-B is a sectionwise view of the present invention titled Disk Displacement No-Shift Speeder in another execution;

Fig. 3-A is an assemblage perspective of the Power Recovery Unit in the state while no power is recovered as covered by the present invention;

Fig. 3-B is an assemblage view of the Power Recovery Unit, as covered by the present invention, whilst Power Recovery is in progress;

Fig. 4-A is a functional perspective of the one-way rotation wheel, as covered by the present invention, as it is rotating clockwise;

Fig. 4-B is a functional perspective of the one-way rotation wheel, as covered by the present invention, as it is rotating counterclockwise;

Fig. 5-A is a functional perspective of the condition wherein the Direct-Transmission one-way rotation wheel, as covered by the present invention titled Disk Displacement No-Shift Speeder,

0130280

in the second execution, is not in a state of Direction Transmission;

Fig. 5-B is a functional perspective of the situation wherein the same Direct-Transmission one-way rotation wheel is in a state of Direct Transmission;

Fig. 6 is a Flow Chart of the Micro-processor Programming according to the present invention;

Fig. 7-A is a functional perspective of the situation in which the Pneumatic Control System according to the present invention embodied in the second execution is not at work;

Fig. 7-B, Fig. 7-C are respectively illustrations of the situation in which the same Pneumatic Control System is working in directions opposite to each other;

Fig. 8 is a three-dimensional perspective of the Detector of the Rotation Speeds as covered by the present invention;

Fig. 9-A is a top analytical view of the Prober for the gear at shifting as covered by the present invention;

Fig. 9-B is a layout sketch of the circuit for the computation Amplifier according to the present invention; and

Fig. 9-C is an orthographic view of the gear-shifting bumper board for the present invention.

Detailed description:

Conventionally, the gear-shifting mechanism as provided for automobiles and land vehicles are executed in manual operations, a prerequisite for such an arrangement is that the driver be thoroughly familiar with driving skills, specifically, the driver will have to step upon the clutch with the left foot, upon the

cont'd./4

-4-

accelerator with the right foot, and to handle with the hand the gear lever all at the same time in order that a coordinated effect together with the steering wheel under control will achieve a combined state desired to secure a save and expedient driving all the times, the pity, however, is that in transmission structure it is obliged to rely on smoothening units comprising clutches or fluid joints or connectors in coordination with shiftwise transmission gear sets to achieve in traction transports, such that in moments when the vehicle has to be set at idle speeds with flame on, the driver will have to turn the clutch onto the first Gear before the Engine rpm can be increased, to follow that, the clutch will have to be properly controlled so that the vehicle may be set to run up in a sure manner, when it comes that it is necessary to change to the Intermediate Gear, it is then required to slow down the Engine rpm firstly and then to step upon the Clutch, in a state of engagement, as it turned to be established in the Intermediate Gear, the Engine rpm may be increased once again, the Clutch being engaged, the vehicle goes on running, the result is that the energy needed to bring the Engine run up from the idle speed will be much more than would be the case to maintain it running at a constant rate, what is more, the Engine, in situations sensing a drastic drop in speed like the present case, would result in subjecting the absorptive suctions resulting from the vacuum to exist when intake mainfold in the carburetor is at idling speeds to put fuels that would not have to be consumed in an ideal case to combustion in the Engine as well thus causing a gross waste of fuels, to improve the inconveniences due to conventional manual gear-shifting operations a hydraulic automatic Gear Transmission

-5-

device came to be known, which truly proves easier for operation, but its structural principles and styles of operation prove to be energy consuming at the same time, because it adopts a fluid connector in place of the manual gear transmission clutch, the fluid connector itself is not involved in Direct Contact Transmission, resulting in a gross loss of transmission at rotation, on the other hand, its gear transmission structure is based on the combination of multiple sets of clutches and planary Gear sets, complicated in construction and will rely on Engine running to secure hydraulic pressures with which to achieve in transmission operation runnings, in addition, the gear transmission thereby depends entirely upon plane contacts of the clutch pieces for transmission, which will easily incur sliding losses and is therefore not suitable for use with heavy-load vehicles such as Trucks and Trailers, all in all, the shortcomings of the lately known hydraulic gear transmission device can be summarized as follows: (1) Poorer transmission loading capacity as compared with conventional manual gear transmission operations; (2) Higher energy consumption rates as compared with conventional manual gear transmission operations; (3) Restricted of scope of application to de luxe stylish sedans only, not ideal for general purpose heavy load trucks or light weight cars.

So a conclusion can be drawn that last mentioned hydraulic gear transmission device is in no way superior to the conventional manual gear transmission systems which are still the mainstream as employed in vehicles found in Auto Markets and in streets everywhere, this very well reflects the concern for an optimal improvements to solve the dilemma that a higher fuel consumption would be inevitable with a more convenient operation for the driver, or else more labour, mental and physical,will have to be discharged to run a car if priority is placed on an economical use of the precious fuels.

The primary objective of the present invention, it is, in view of the shortcomings found with both the conventional manual transmission technique and the later known hydraulic transmissions to provide a Disk Displacement No-Shift Speeder after an in-depth, thorough study of all known defects experienced heretofore in driving practices by drivers everywhere, which will not only achieve in substantial save of precious fuels that would be consumed unwisely and needlessly otherwise, but also achieve in save of human labour discharged in the execution of a gear transmission by the provision of a ventilation hole that goes deep into the intake manifold on the realization that suction will be produced by an intake effect to take place in the intake manifold as the vehicle Engine is set to rotation running, such that the suctions are used to control a clutch in transmission with a transmission shaft so that a compressor therefor will be driven to produce air pressure for storage in a power storage vessel which serves as a readily available energy to be integrated into a microcomputer -processed system prepared specifically according to the subject invention so that the brake may be transmitted in a timely manner so as to carry the Disk displaced to an extent under control so as to set the journey of transmission by the Links to transmit the Disk under control so that the one-way rotation wheel will be driven to transmit the affected shaft sleeve with the Engine Transmission thus achieving eventually a gear transmission through direct traction produced for the vehicle in an automatic operation with a substantial save of fuels.

-7-

So it is clear that another objective of the present invention it is to provide a Disk Displacement No-Shift Speeder device complete with a base gear of a very low rating which will yield a tremendous torsion for heavy loaded vehicles to assist in climbing uphill.

Still another objective of the present invention it is to provide an energy-saving Disk Displacement no-shift Speeder as a traction device complete with a base gear of a very low rating that will serve to activate the vehicle by accelerating the Engine running to an rpm as low as 700 rpm thus achieving in the optimal application of even a single drop of gasoline fuel as opposed to the conventional cases where activation is not likely until the running of Engine reaches up to 1300 rpm.

What follows is a detailed account of the structural characteristics, performance merits, and operation principles of the present invention with reference to the attached configuration of drawings thereof:

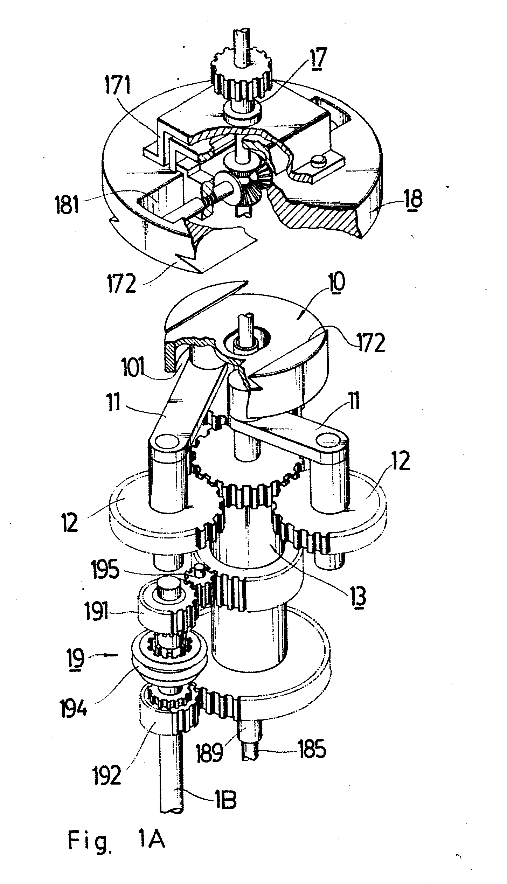

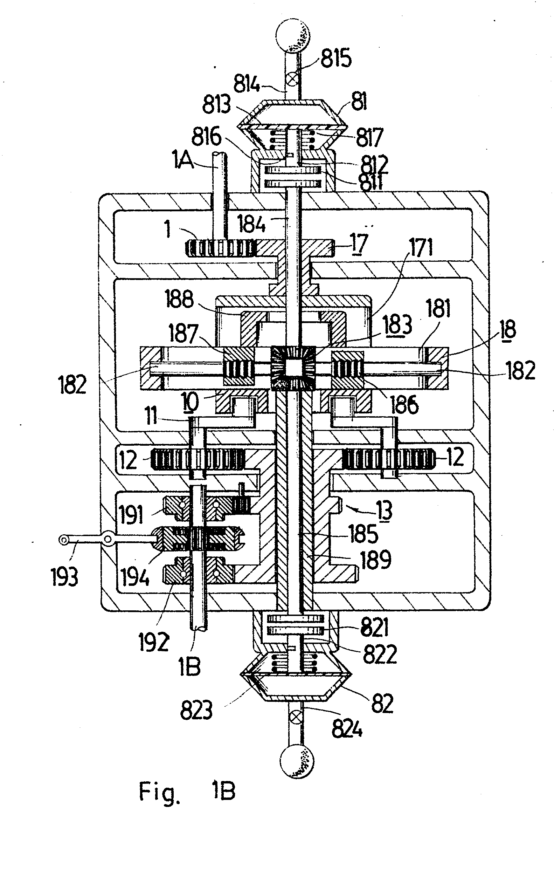

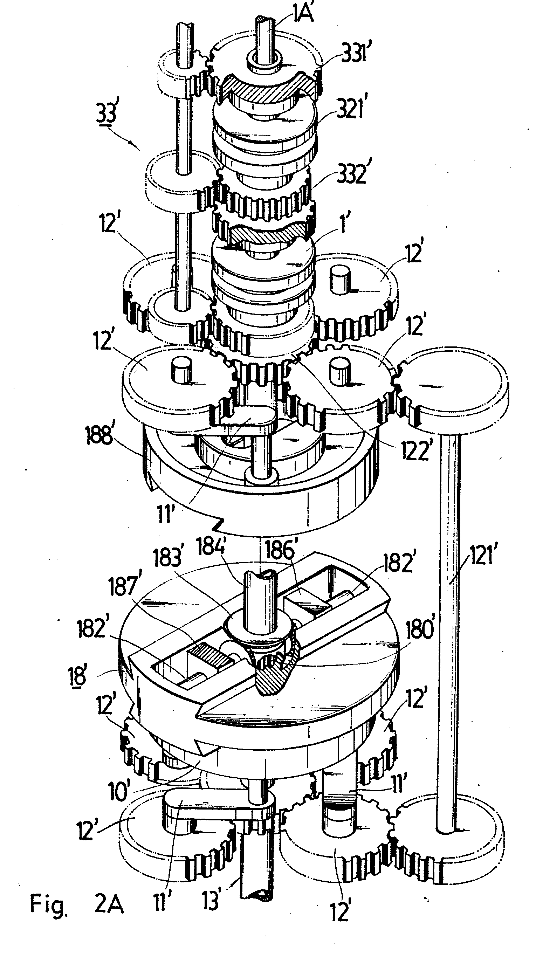

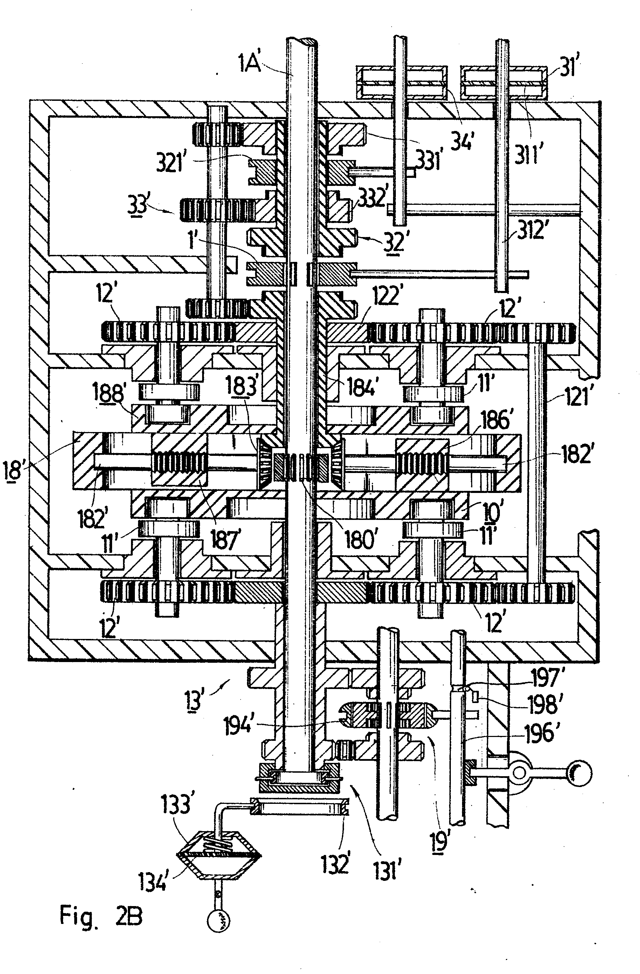

To better help in the understanding, the description will go for two executions of the present invention respectively, the present invention consists essentially of a Disk Displacement No-shift Speeder as illustrated in Fig. 1, Fig. 2, together with a Micro-processor which gathers and dispose of the informations covering Engine rpm, travelling speed, acceleration condition, neutral gearing, and other relevant ones set by the driver, together with those covered by a Direct transmission shift or an indirect transmission shift, the disposition will serve as the basis in accordance with which the extent to which the Disk is to be displaced by the mechanical system that is controlled by the Commanding Pneumatic Power system in an effort to perform the switchover exchange related to a transmission, direct or indirect.

What is given in Fig. 1 is an embodiment of the Disk Displacement No-shift Speeder device in the first instance, comprising three sets of Links (11) equi-angularly fit with respect to each other, which may come in multiple sets fit in multiple but equal angular settings if preferred, the one-way rotation wheels (12) in common transmission and affected shaft sleeve (13) engaged thereto, the other end of the Links (11) being laid and retained in the annular grooveway (101) provided at the bottom of the transmission Disk (10) so that the gear (1) on the Engine Main Shaft will be in a position to give transmissions to the Gear Shaft Sleeve (17) so as to bring the Rotation Disk (18) into rotation as required, the other end of the Rotation Disk is attached to a support formwork by means of a Shaft Sleeve (189) so as to help realize a stable rotation of the Disk (18) which will bring the Disk (10) to rotation as well, further to taht, the displacement of the Disk (10) arranged to this effect will realize a transmission simulating that of an Eccentric that which will bring the Link (11) to rotation in step with the eccentricity of the Disk (10) at any a given moment, to the effect that the one-way rotation wheel (12) in transmission with the Link (11) will give thrust to the shaft sleeve (13) to bring forth a rotative effect such that two transmission gears (191) (192) as engaged to the Clutch (19) will yield rotations contrary to each other by the action of a guide (195), the idea here is that by the execution of the selection ~tion lever (193) for coupling to the clutching gear (194) that is in transmission with the output shaft (1B) to attain an engagement with or else disengagement from the two transmission gears (191) (192) it is made possible to set the output shaft (1B) to rotate in the positive or reverse direction or else to hold still, thus achieving the performance of a forward gear catch, reverse gear catch, or neutral catch in operation accordingly, the functions of the clutch is identical to regular ones and is therefore omitted for description, in this manner, it is made possible to attain an indirect delivery of the output of the Main Shaft Gear (1), that is, the Engine rpm with a relatively larger torsion with which to achieve in the activation, namely, the startup of the vehicle, the assumption of a heavy load under lower travelling speeds, and in an added power output of help in a climbing uphill. What is given in Fig. 1-B is a sectionwise perspective of an illustration of the processing just characterized above, wherefrom it is clearly obvious that two screws (182) as provided in the grooveway (181) within the Rotation Disk (18) will rotate in step with the Rotation Disk (18) so long as the Disk (18) is in rotation, the shaft levers (184) (185) will therefore follow up in a synchronized rotation with the Rotation Disk (18) when the rotation of the two screws (182) come to engagement with the cone-shaped gear set (183) on passing by one end thereof, one terminal shaft (812)(822) of the brake (811) (821) being fitted respectively to a film (813)(823) as provided in a closed enclosure (81)(82) the other end thereof serves to give access to a power storage vessel through the medium of ducts (814)(824) by coupling, such that when the Micro-processor-controlled intake solenoid (815) is open to let in air pressures to be stored in the power storage vessel via duct (84), the film (813) will be bent to give rise to a displacement of the brake (811) so as to get into contact with the shaft lever (184), the terminal shaft (812) being provided with a grooveway that will come into engagement with a fix but projecting stem (816) in order that the film (813) be kept free from damage due to rotation of the brake in step with shaft lever (184), the result is a slowing down in the rotation speed of the shaft lever (184), to the effect that the rotation shaft (184) would no longer maintain a synchronized rotation with the Rotation Disk (18), the speed differential to take place accordingly would serve to bring the gear set (183) to an engagement transmission that which will set the screw (182) to rotation as well, to follow that, the match of the threads on the screw (182) to the female threads on the blocks (186) (187) will produce a situation wherein the sliding blocks (186) (187) will transmit both the disk (10) and counterbalances (188) to deviate towards the outside, such that a spring (817) will set the film (813) back to recovery when the intake solenoid valve (815) is at closure, the same situation, if happened to the closed enclosure (82), will carry the transmission disk (10) and the counterbalance weights (188) to displace centripetally, the gravitation due to the counterbalance weights shall be such as to mate with that due to the transmission disk (10) so as to ensure the stability of the rotation disk (18) at rotation. The sliding displacement of the counterbalance weights (188) and the transmission disk (10) will take place alongside the grooveway (171) and the dovetail groove (172) respectively, as illustrated in Fig. 1-A, to secure stability the entire operation, a larger deviation of the transmission disk (10) will mean a larger amplitude to sweep back and forth by the transmission of the Link (11) that is driven by the centrifugal (eccentric) deviation, and consequently the one-way rotation shaft (12) in transmission with the Link (11) will produce a larger stroke of journey to be transmitted by the affected shaft sleeve (13), in addition, three one-way rotation wheels will continually bring rotative thrust against the affected, that is, the recipient shaft sleeve so that the output rpm of the same will increase steadily.

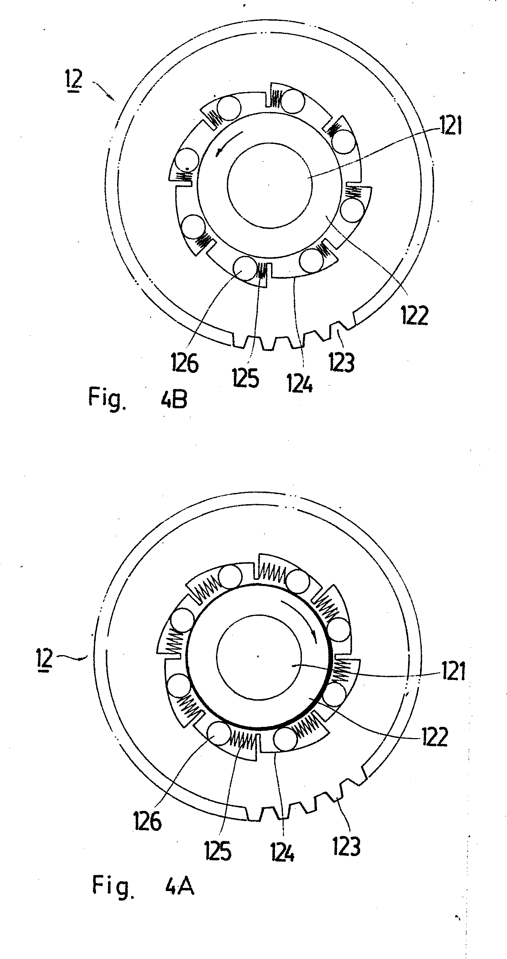

What is shown in Fig. 4 is the interior construction of the one-way rotation wheel (12), the one-way rotation by transmission as achieved therefor is due to the transmission effects to be produced when the dental intervals (124) produced by the depth differential between both ends of the interior rim edge of the external gear (123) and the rotation wheel (122) in transmission with the central axis (121) thereof are checked by a rolling stem (126) that is controlled by a spring (125), referring now to Fig.4A it is seen that when the rotation wheel (122) is set to rotation in the clockwise direction, the rolling stem (126) will then be transmitted by the thrusts from the spring (125) and the frictions due to rotation wheel (122), it will as a result progress in the clockwise direction as well and exert a secured tight-up holding contact somewhere between the dental interval (124) and the rotation wheel (122) such that a common transmission will take place for both the rotation wheel (122) and the External Gear (123) which will be subject to rotation in the clockwise direction under the transmission of rotation wheel (122), on the contrary, should the rotation of the rotation wheel (122) be executed in the counterclockwise direction, then the rolling stem (126) will be pushed to displace in the counterclockwise direction instead, rather than producing a tight-up joint transmission, the External Gear (123) will therefore abstain from following in rotation whatever, reference at this juncture is called to Fig. 4B.

What follows is a description of another embodiment of the present invention titled Disk Displacement no-shift speeder device in the second instance for which a three-dimensional perspective is given in Fig. 2A, a sectionwise perspective given in Fig. 2B, which is distinguished from the embodiment in the first instance by the replacement of a transmission disk in place of the counterbalancing weights. From Fig. 2B it is clear that the Rotation Disk (18') is subject to a synchronized rotation through engagement transmission by the Main Axis (1A') via the annular dental row (180') provided midway, when that happens, two screws (182') as provided in the grooveway within will likewise follow the rotation disk (18') in rotation, in the meantime, the mesh-up action to turn up in the conical gear set (183') will serve to transmit the shaft sleeve (184') to a rotation in synchronism with the rotation disk (18'), now when the film (311') in the air-tight enclosure (31') should yield wavelike pulsations under the action of the presence of pneumatic pressures, then a displacement will be seen of the Link (312'), which will bring the Clutch (1') to get into engagement with or else disengagement from the shaft sleeve (184') and the transmission shaft sleeve (32') respectively accordingly, while it is in engagement with the shaft sleeve (184'), the shaft sleeve (184) and the Main Axis (1A') of the Engine will be driven thereby to come to a synchronized rotation in step with the rotation disk (18'), such that the screw (182') will be set to a passive condition, on the other hand, when the Clutch (1') is engaged with the transmission

0130280

shaft sleeve (32') to act to drive the transmission shaft sleeve (32'), into synchronized rotation with the Engine Main Axis (1A'), then what follows forthwith is that shaft sleeve (184') will further be transmitted by the gear unit (33') to result in a change of the rotation speed of rotation sleeve (184') reflecting in speed differential with respect to the rotation disk (18'), unable to catch up with the rotation speed of the screw (182'), in other words, the screw (182') will be set to rotation by the mesh-in actions of the conical gear set (183'), what with the follow-up actions of the two sliding blocks (186')(187') as screwed unto the screw (182') through threads couplings it will achieve in bringing the two transmission disks (10') (188') as in connection therewith and as laid secured to either end of the rotation disk (18') respectively by means of a dovetail groove to deviate centrifugally or else centripetally at the same time, thus accomplishing the extent of deviation of the transmission disk (10') (188'), as regards the rotation speed that should come faster or else slower than that of the rotation disk, to be generated by the shaft sleeve (184) under the transmission of the gear unit (33'), it is to be accomplished by a transmission differential by virtue of the engagement or disengagement of two differently sized transmission gear (331')(332') with respect to a Clutching Gear (321') that is under the control of another air-tight enclosure (34') in the execution of a mesh-up activation with transmission shaft sleeve (32') as the other party, the coordinated control of the air-tight enclosure with respect to the pneumatic systems will be accounted for later in the text.

-14-

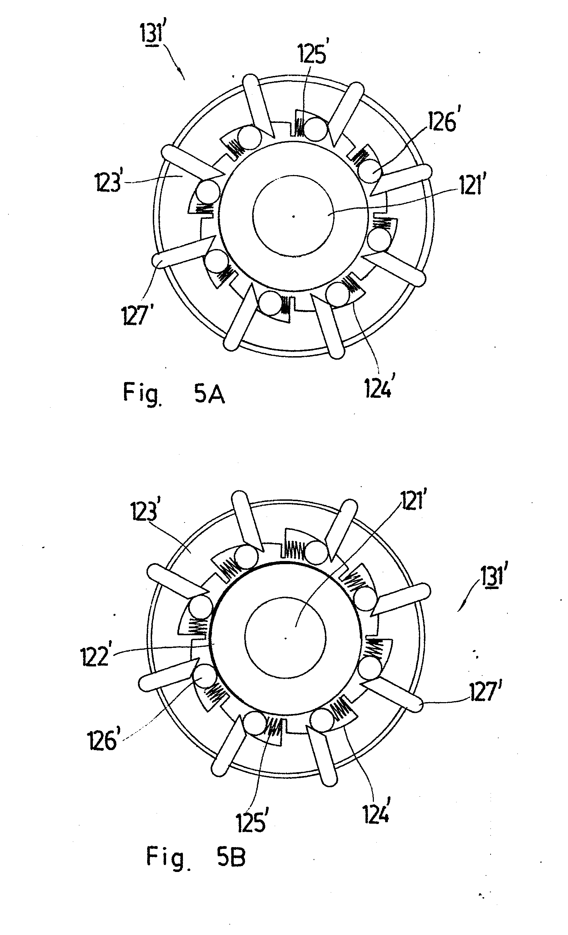

For the execution in the second instance under discussion, there are provided four sets of transmission links (11') lined up in like angular intervals and four sets of one-way rotation wheels (12') lined up likewise, with a gear (122') being in mesh with the central point of the four one-way rotation wheels mentioned above to make up a transmission, the counterpart four wheels underneath will altogether mesh up a recipient shaft sleeve (13'), in addition, one corresponding pair of one-way rotation wheel up and down are meshed together by means of a gear shaft lever (121') in order that the pushing thrust as produced by the Link and the one-way rotation wheel overhead will also be available for exertion unto the recipient shaft sleeve (13) through the transmission of the gear shaft lever (121'), such that the construction according to the subject invention will turn out double thrusts for the recipient shaft sleeve. The Engagement Clutch (19') is the same as that for the embodiment in the first instance in structure and performance. Referring now to Fig. 2B, Fig. 5A and Fig. 5B, it is seen of a one-way rotation wheel fixed to the top of the recipient shaft sleeve (13) characterized in that the external wheel (123') to the one-way rotation wheel (131') is in connection with the recipient shaft sleeve (13') whereas the central shaft (121') is linked to the Engine Main Axis (1A'), with perforating holes provided across the wall of the external wheel, complete with an insertion pin (127') with a tilted front end, to be designed to take the form of a cone or of a bumper so that it may not fly out due to centrifugal forces, each insertion pin shall be capable of controlling a rolling stem (126) whilst the insertion pin itself

-15-

is secured in position with a toggle (132') such as given in Fig.
2B, when the rotation speed of the recipient shaft sleeve (13')
has not yet reached the rotation speed set for a Direct Transmission,
then the toggle (132'), under the push by a bending interior film
(134') as provided in the enclosure (133'), will catch onto the
outside of the one-way rotation wheel to produce a situation where
the insertion pin (127') will be pushed inwards to exert thrusts
upon the rolling stem (126') so that the latter will not come
into contact with the dental notch (124') of the external wheel,
as obvious from Fig. 5A, whereupon no effects will be released
from the one-way rotation wheel, when it turns out that the rotation
speed, that is, the vehicle speed reaches the designed Direct
Transmission Speed, the Micro-processor will then function to set
the film (134') back to position such that the toggle (132') will
part from the one-way rotation wheel, whereupon the insertion pin
(127') will ascend under the thrust due to spring (125') thereby
releasing control of the rolling stem (126') so that the external
wheel (123') would move forth clockwise, and eventually get wound
up closely laid up in-between dental notch (124') and the rotation
wheel (122'), as may be seen from Fig. 5B, the result is that the
external wheel (123') would come to a synchronized rotation in
step with the central shaft (121'), that is, the recipient shaft
sleeve (13') will be transmitted straight by the Engine Main Axis
(1A'), in the meantime, a substantial save of power in the course
of an indirect transmission is achieved because of the recovery
of the transmission disk (10'))188') through control by the Micro-
processor. Under conditions where a direct transmission prevails, should vehicle speed come much in excess than the speed rate set for a direct transmission that which results in a rotation speed of the recipient shaft sleeve (13') that is faster than the same due to the Engine Main Axis (1A'), no unfavorable impacts whatever would be brought to the Engine all the same thanks to the structure designed for the one-way rotation wheel under the present invention.

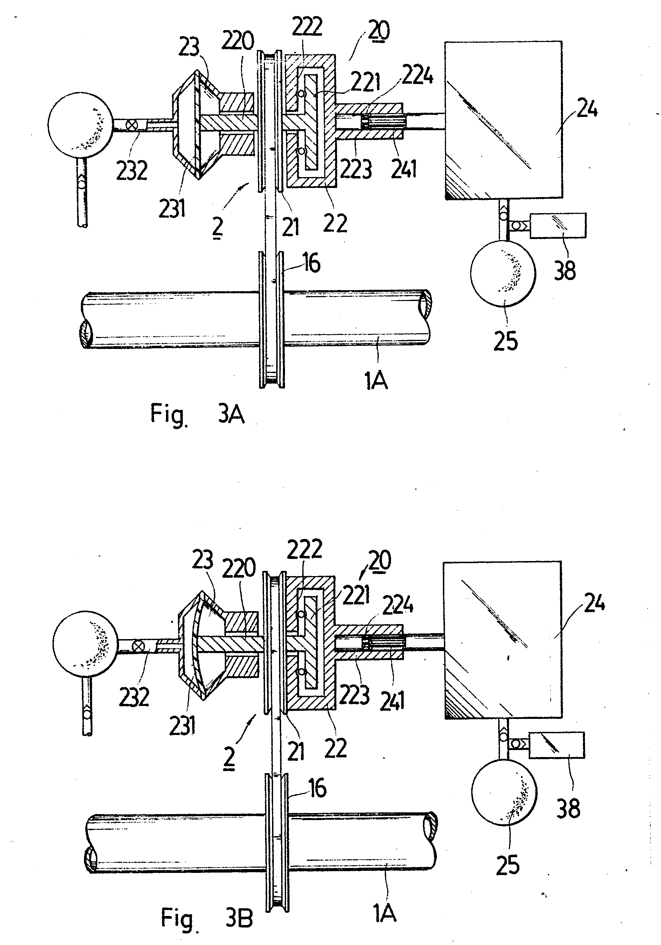

In view of the fact that a vehicle will use a lot of fuel in going from startup all the way to the en route cruising speed, in taking a braking action or in setting the accelerator at full rating that which will bring very undesirable effects to the Engine, for the present invention there is provided a power recovery device (2) on the vehicle transmission shaft (1A) such as is shown in Fig. 3A, to serve to conserve energy derived from power losses to occur when the vehicle turns abruptly from a high speed to a lower travelling speed for use as an effective energy source instead, in substance, it means to have clutch belt wheel (21) driven by transmission shaft belt wheel (16) by means of a frictional clutch (20), now as the shaft core (220) on one end of the frictional rotation wheel (22) is attached to a film (231) that is provided in an air-tight enclosure (23) whereas the other end of the air-tight enclosure (23) is connected to the Engine admission manifold with duct (232), so that the vacuum suction occurring to the admission manifold when the Engine drops from a higher speed to the idling speed will serve to cause a deviation of the shaft core (220) of the rotation wheel (22) so that the rotation disk (221) in connection with the shaft core (220) will consummate in a pressured contact with the interior wall (222) of the rotation wheel (22) which will therefore follow in rotation in step with the belt wheel (16) of the transmission shaft, reference at this point is recommended to Fig. 3B, on the other

hand, the shaft core (223) on the other end of the rotation wheel (22) is provided with an interior dental front (224) which will consummate a mesh-in engagement with the exposed dental rim (241) of the compressor (24) so that the compressor (24) will do work to produce high pressure air for storage in the high pressure storage vessel (25), which will serve to produce a speed differential between the output of the shaft lever (184)(185) (Fig.1) and the output due to shaft sleeve (184') as related to the rotation disk (18) with which to drive the disk (10) to deviation as the vehicle is travelling on. So to speak, in terms of the correlation between Engine and Gear-shifting under the present invention, the Gear-shifting is structured to suit Engine unlike the conventional case where the reverse prevails that which very well accounts for a hard-stricken Engine that, as a rule, eats up a lot of fuel energy when at work, one more thing to note is that the power recovery system according to the present invention will serve in the capacity of a regular brake as well.

There is one exception that has to be related herewith, that is, to prevent vanishing of the power as conserved in the high pressure storage vessel (25) owing to the vehicle laying idle for a long period, a DC motor (38) can be used to pump the high pressure air straight into the high pressure storage vessel (25) for use elsewhile.

What follows is an account of the control process prevailing in the enclosed space, illustration on Fig. 2B (31'), (34'), of the pneumatic system as covered in the embodiment according to the second instance of execution, take enclosure (31') for instance, it is divided into right, left halves by a diaphragm

-18-

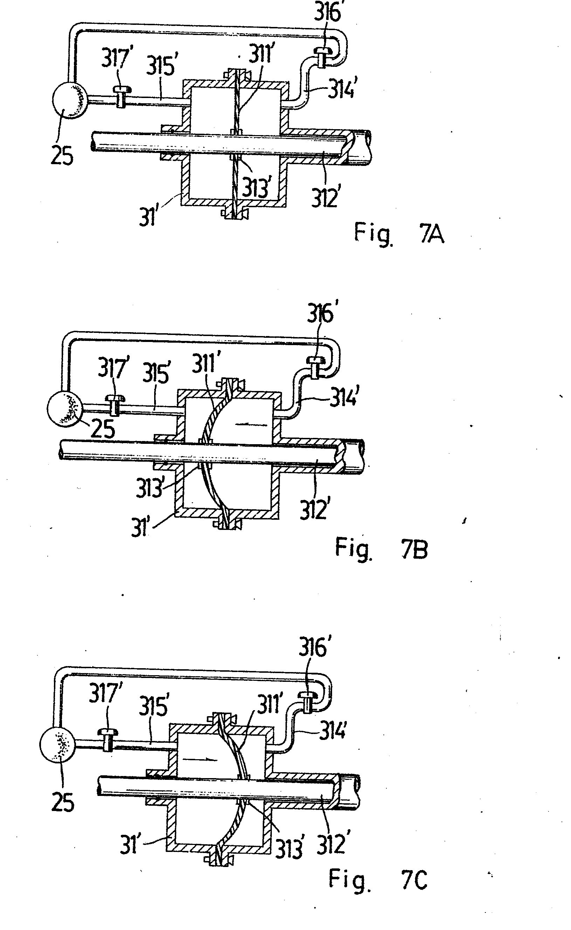

(311') which is complete with a metal washer (313') in center to permit passing of a Link (312') and fastened in position with screwnuts, on the two enclosure halves there are provided respectively a passage duct (314')(315') complete with solenoid valves (316')(317') capable of controlling absorption or admission of the gases, referring to Fig. 7A it is seen of the diaphragm (311') lying at center, no deviation whatever produced by the Link (312'), from Fig. 7B it is seen of a situation where diaphragm (311') starts to displace to the left under force, (Micro-processor functioning to set solenoid valve (316') to open), whereupon Link (312') will deviate to the left as well; in the contrary case, however, as illustrated in Fig. 7C, both the diaphragm (311') and the Link (312') will deviate to the right.

There is provided for the present invention an Electronics Automatic Control System which will achieve in a continuous operation when the present invention is working in the Automation Mode, which comprises a Detector of Engine rpm, a sensor of travelling speeds, a prober of the acceleration by depth, a gear range detector, a gear position detector, information processing centre (Microprocessor), solenoid valve and instrumentation panel, all of these serving to control the performance of above mentioned Disk Displacement No-Shift Speeder that is the very subject of the present invention, specifically it means exchange switchover of the transmission unit, direct or otherwise, operation of the power recovery clutch to achieve in the final goal of fully automatic no-shift speed control, the constituting members thereof will further be described as follows:

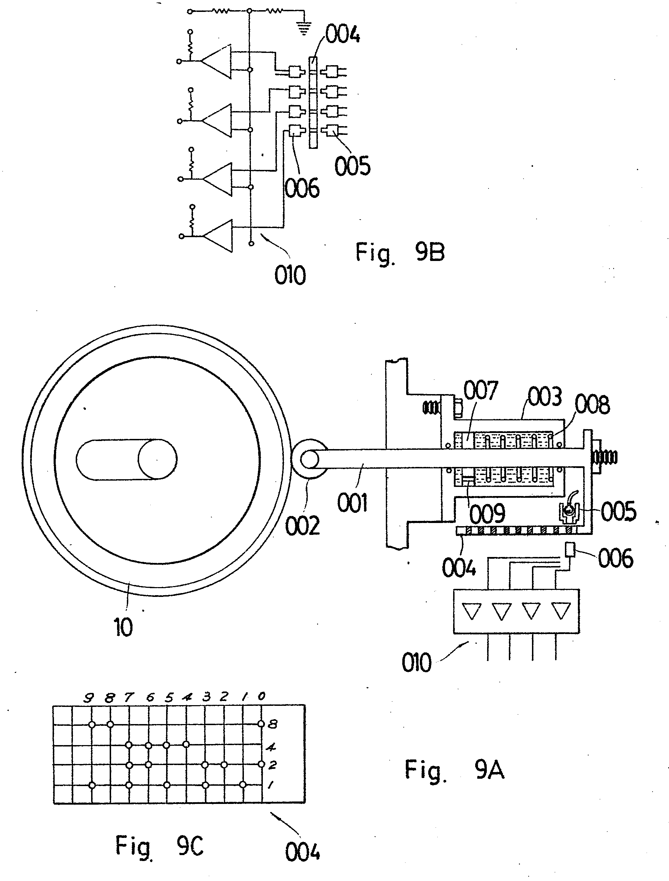

1. Gear Range Detectorr  consisting of a gear range board, a detecting lever and a circuit of computation amplifier, as illustrated in Fig. 9, the detecting lever (001) set into contact with the edges of the transmission disk (10) by the rolling wheel (002) on one end, the other end thereof passed across a hydraulic chamber (003) for connection with a Gear Range board, with four sets of illumination sources (005) and light sensor (006), that is, photo-sensitive resistors provided on either side of the Gear Range board (004), on the Gear Range Board (004) there are provided, in binary sequences) suitably spaced perforation holes serving to give push to the detecting lever (001) to bring about deviations when the transmission disk (10) is deviated to arrive in an eccentric rotations, the result is that the Gear Range Board (004) will produce a displacement proportional to the journey achieved through deviation, because of the drag realized by a bumper board (007) as provided on the detecting lever (001) occurring due to the presence of hydraulic fluids in the hydraulic chamber (003), the detecting lever (001) will not be driven back to the original position when the edge rim of the transmission disk (10) should part from the rolling wheel (002) temporarily due to an eccentric rotation thereof in despite of the tensile resilience due to spring (008), a point to note here is that on the bumper board (007) there is provided a hole way (009) by virtue of 'which the bumper board can enjoy a free sliding movement in the hydraulic chamber, when a  displacement takes place on the bumper board (004), the light source (005) will, by way of the correspondingly located hole on the Gear Range Board, penetrate to shed light on the correspondingly provided light sensor (006), the resistance of the photo-sensitive resistor changed accordingly, to follow that, the resistance prevailing in the computation amplifier (010) as related to the input of the photo-sensitive resistor will be changed likewise, the voltage after change will produce a differential by comparison to the voltage as set in the computation amplifier (010) fed in from the other end, to the effect that a signal will be delivered from the computation amplifier to go to the Microprocessor, thus, a particular displacement in the Gear Range Board (004) will be sufficient to compel the computation amplifier circuit to feed a particular signal into the Microprocessor, which, on receiving and acknowledging such a signal, will be kept adviced instantly the deviation and the extent thereof of the transmission disk (10) at any  moment.

2. Detector of acceleration by  depth: Basic structure akin to the case of the Gear Range Detector above, the Gear Range Board being fitted to the Link in connection with the Accelerator, such that it will be stepped upon by the driver to realize deviations concurrent with the driver's activation of the Accelerator, to the effect that the computation amplifier circuit will feed a discrete signal to the Micro-processor thereupon with which a determination can be reached to as regards the depth of the Accelerator in action, still, it would not be necessary to use a device of hydraulic chamber thereon, but a compression spring should be used instead, so that the Gear Range Board will follow the Accelerator Link to a highly sensitive, synchronized displacement.

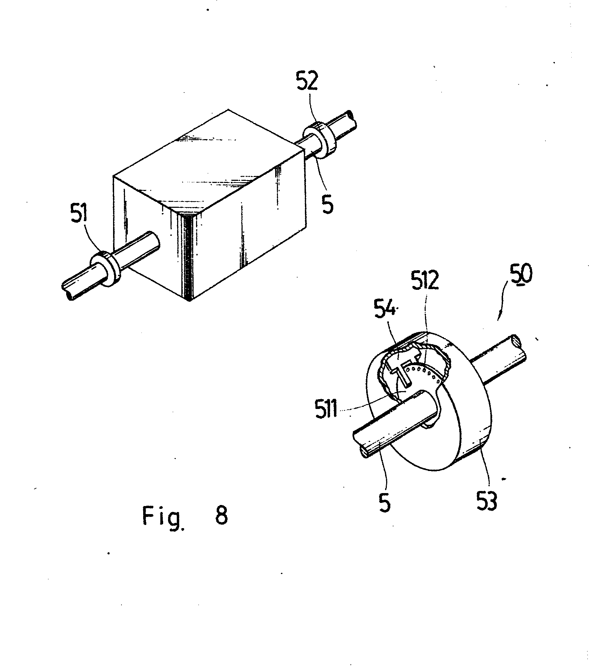

3. Travelling speed Detector (50): To be installed unto the output transmission shaft (5) of the Speeder Box, comprising a Gearing Detector (51) and an Output Rotation Detector (52), as illustrated in Fig. 8, from which it is clearly seen of a Disk (511) Detector rotating coaxially with the transmission shaft (5), the periphery of the disk (511) prepared with a number of lined up holes (512), complete with a photo-sensitive switch (54) comprising a light emission device and a receiving device fitted to the annular shell (53) on the outside and to the interior of the outer shell concurrently, the idea is that by the intermittently produced receiving frequencies to come into being when holes (512) pass one by one across the photo-sensitive switch (54) following a rotation of the disk (511) in step with the rotation shaft (5) it will be possible to detect the speed, fast or slow, of the transmission shaft at rotation, that is, the travelling speed of the vehicle provided accordingly, which speed will be analyzed by the Micro-processor to serve as a reference for control of the vehicle at large.

4. Detector of Engine rpm: Essentially the same as Travelling speed Detector in structure, installed unto rotative parts related to Engine, to be transmitted by the Engine in rotation to generate an electronic signal signifying a rotation in progress for output as a piece of information in connection with rotation speed for analysis and processing by the Micro-processor.

5. Gear Position Detector: Installed unto the Link that controls the mesh-up Clutch in forward or backward movements, referring to the right lower section of Fig. 2B it is seen of an annular groove (197') as provided on a suitable position on the Link (196') controlling the mesh-in Clutch in forward or backward movements, complete with a Fine Switch (198'), structured so that whilst the position of the Link (196') is such that the longitudinally active Clutch (194') is maintained at Neutral position, the annular groove (197') will likewise be in a position to start up activation of Fine Switch (198') in an effort to feed a signal signifying a Neutral Position to the Micro-processor.

6. Instrumentation Panel: Complete with a digit display to indicate current travelling speed, Engine rpm, Direction Transmission, Indirect Transmission, Gear Position, Reverse Gearing, and other informations.

7. Information processing centre ( Microprocessor): Comprising a Circuit Board consisting low cost, easy-to-maintenancing large-sized ICs, which works basically by virtue of an aptly designed memory formulas (softwares) so that informations as fed to the Micro-processor will be precessed for output as an action directive, excellent in performance, broad in scope of applications, wide adaptability and compatibility, software circuits remain unchanged no matter mounted to whatever kind of vehicle, all that has to be done to adjust to a newly remounted vehicle is to change the programmes as entered in the Microprocessor to suit specifice control requirements necessitated by a particular vehicle.

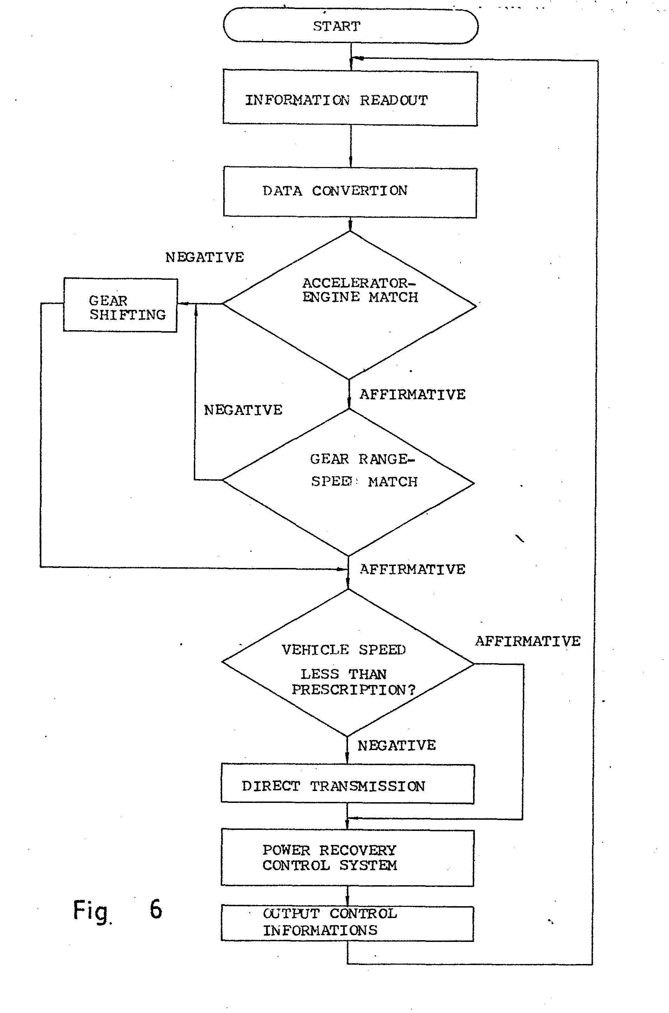

The operation procedure as covered by the Microprocessor as covered by the present inventioncomprises essentially of eight major steps to be accounted for as follows, reference to Fig. 6 is suggested at this point:

-23-

(A) Taking the readings of informations:

(1) Travelling speed: Travelling speed per hour of the vehicle taken with Travelling Speed Detector, expressed in miles per hour;

(2) Engine rpm: to be taken with the Engine rpm Dectector;

(3) Accelerator stepping extent: to be taken with Detector of Acceleration by depth, as done by the driver;

(4) Gear Range information: Although the invention device is a no-shift device, yet to accommodate with the characteristics of the Microprocessor as covered therein, the Gear Range information is derived as linearly curved speed curves from the Gear Position Detector for sectioning into a number of Gear Ranges with which the Microprocessor will identify as to the extent and progression of a speed variation as indicated by the Speeder.

(5) Gear Position information: making available the current condition of the Gear, neutral; or otherwise;

(6) Detector of braking actions: to identify whether the driver has stepped upon the Accelerator;

(7) Detector of high pressure aerodynamic storage vessel pressures.

(B) Exchange of informations: Converting all informations as entered into the Microprocessor as Gear shifting datas into a unified units readily available for comparison by analogue methods.

(C) Taking as the basis upon which to effect an evaluation of a Gear Shift such informations as Travelling speed, Engine rpm, Acceleration condition and Gear Ranging:

(1) checking to see whether Acceleration condition will

-24-

match Engine rpm: under regular loading conditions on a flat surface, the didriver's stress as reflected on a stepping of the accelerator should in some certain way bear some close relevance of Engine rpm, which, however, will be ruled out in cases where the vehicle in question is subject to very heavy loading burdens or experiencing a climbing uphill, Engine failing to reach prescribed rpm accordingly, whereupon the Microprocessor, based on informations surrendered to that effect, will identify that the situation of an incapacitated Engine instantly, and react to take action to have the Speeder changed to a lower Gear Range in order that the Engine may resume normal rotation rpm, in contrary cases, however, it would mean that the load borne by the Engine is much too light, and an action in response will have to be taken to change to a higher Gear Range accordingly,

(2) checking to see whether the Gear Range will match with speed: as is well known to all, it is a common practice that a vehicle, travelling on a flat surface en route with cruising speeds, on reaching a specific travelling speed, will have to have the speeder shifted to a suitable Gearing position so that the vehicle may travel in optimum conditions all the way without trouble, the moment to effect a Gear shifting will be at maturity when and if the travelling speed is out of match with prescribed Gear Range.

(D) Execution of a Gear Shifting; it will turn to be the right time to execute a Gear shifting where and when:

(1) in cases where the Engine rpm is A1, the Acceleration condition is B1; if A1 is greater than B1, then a Gear Shifting will have to be taken to a higher Gear range so as to help to increase the amplitude of deviation by the transmission disk; however, if A1 is smaller than B1, then a Gear Shifting will have to be taken to a lower Gear Range in an effort to induce a reduction in the amplitude of deviation by the transmission disk;

(2) in cases where the actual speed changing Gear Range is regarded as A2, and the speed changing Gear Range that should be matched by the travelling speed is regarded as B2; then

the Gear shifting should be to a Lower Gear Range if A2 is greater than B2; to a Higher Gear Range if A2 turns smaller than B2.

(E) checking to see if the travelling speed is slower than the speed rate set for a Direct Transmission; when it turns that the travelling speed of the vehicle has reached a certain rate, the torsion as produced by the Engine will be available for indirect transmission without reliance on the Speeder device, thus Engine Main Axis may combine with the Output Axis to achieve in a Direct Common transmission instead, thereby avoiding the power rate losses that would be inevitable in cases of indirect transmissions through the Speeder device.

(F) Turning to direct transmission by or with a combination of the Engine Main Axis with the Output Axis.

(G) Controlling the clutch of the power recovery system to engagement or disengagement by means of a proper processing treatment of informations covering: 1. travelling speed, 2. Engine rpm, 3. acceleration condition as acquired from Detector, 4. those forwarded by the Detector of the Accelration petal in case of an acceleration accomplished by the Micro-processor, for example;

-26-

When the acceleration petal is released whilst the driver's foot is not yet fully withdrawn from the acceleration petal, the Engine rpm will come down all the same, under such conditions, the Clutch has to be engaged completely to give transmission to the power recovery system, still, the Clutch should not be put to engagement when the driver's foot is removed from the acceleration petal so as to let the running vehicle to glide along so as to achieve in the save of fuels, but nonetheless, the driver's foot, on touching the braking petal, will be a sufficient cause to bring the clutch to engagement, that is, closure.

(H) Output control characteristics: The output of the Microprocessor will be controlled to send the information signals to amplification by transistor crystals, then the solenoid valve will be opened or closed to achieve in automatic gear shifting operations through and through.

There are five categories of informations covered in the output control:

1. Transmission signals for the Direct Transmission Gear;

2. Transmission signals for the Indirect Transmission Gear;

3. Signals to change a lower speed Gear to a Higher speed Gear;

4. Signals to change a Higher speed Gear to a lower one;

5. Activation Signals to set the Clutch of the power recovery Device to engagement or disengagement status.

-27-

From the descriptions going thus far it is understandably clear that the Speeder device by structure functions to control a Clutch to give transmissions to compression mechanism so as to produce pneumatic power by utilization of the vacuum absorptive suction produced while vehicle Engine is set to rotation, what with the manipulation and performance of a Microprocessor therefor a transmission termed as Disk Displacement No-shift Speeder operation is made a possibility such that a travelling vehicle will be available to set the speed Gearing in strict conformity to the Acceleration operation so that the Engine rpm will discharge its role in full in the form of utilizable power without wasting a bit of the precious utilizable energy source, which, in the meantime, will provide a convenience unexpected of for the drivers in conducting their vehicles, it is therefore contended that the present invention is a truly economically and professionally worth-while piece of invention. It has to be pointed out in particular that an embodiment of the invention has been executed as an incorporated section to a conventional vehicle, and found as ideal and wonderful as the descriptions made in the foregoing as a real gospel to the drivers.

It should appear apparent that what has been given thus far in the disclosure will serve but as one or two examples of the present invention in execution, all modifications, revisions, applications of the invention that does or do not deviate from the contents contended for the invention should doubtless be regarded as falling naturally into the coverage to be protected for the present invention for the period specified in the country to which the present is submitted in the hope of securing a Patent Grant.

## Claims:

1.  A Disk Displacement No-shift Speeder device, comprising a mechanical transmission system consisting of a transmission disk of which the deviation can be controlled as desired, Links, one-way rotation wheels and recipient shaft sleeves, which together with a Clutch to be controlled by the vacuum suction that is produced automatically by connection to the admission manifold of the vehicle Engine, said clutch will carry a compression unit to produce air pressures for storage in a power recovery storage in a power recovery storage vessel, complete with a pneumatic system which will control mechanical transmission structure to drive the transmission disk to a deviation as required, an electronic automatic control system assuming control of all of the above-mentioned mechanisms such that a vehicle provided accordingly will save a lot of energy in the course of a gear shifting and achieve more convenience for the driver in a drive, characteristic in having the Engine Main Axis to give transmission to a rotation disk and a transmission disk connected with dovetail grooves and rotation disks, in the provision of an annular grooveway on the transmission disk for laying endfirst by that end thereof that is lined up with a number of Links at equi-angular intervals, whereas the other end is in transmission with a one-way rotation wheel, such that by a deviation of the rotation disk in transmission with the transmission disk the Engine Main Axis will bring it to rotation so that the Link will be acted upon therewith so that the one-way rotation wheel will secure a mesh-in engagement with the recipient shaft sleeve to the effect that the vehicle will be transmitted to progression by indirect drive by the torsion due to rotation of the Engine under the action of the clutch, on the other hand, in that direct transmission of Engine power is also made possible by the moment a certain prescribed rate of the travelling speed of the vehicle and of the Engine rpm have been attained by the rotation of the one-way transmission rotation wheel linked to the Main Axis.

2. The transmission disk according to claim 1, as linked to a sliding block as screwed to a screw inside the rotation disk, and that another transmission disk or counterbalancing weight may be set in connection with the other end of the rotation disk for another sliding block attached to the same screw in the rotation disk as may be deemed preferrable according to the particular condition of the rotational stability of the rotation disk, characteristic in that by means of the mesh-up engagement of the conical gear sets on the front ends of the two screws a shaft lever (or shaft sleeve) will be set to achieve in a synchronized rotation with the rotation disk such that control of the transmission disk in terms of deviation on the rotation disk is made possible by transmission of the disk by the sliding block as the two screws are driven to rotation due to speeddifferential to be produced between the rotation disk at rotation and the rotation as a result of a change in the rotation of the shaft sleeve or shaft lever effected by the pneumatic system related to earliers.

3. The one-way rotationwheel according to claim 1, characteristic in the control of a rolling stem by a spring as provided in the undulated dental cavities between both ends of the interior rim of the rotation wheel in link with the central axis in transmission and the External wheel thereof, such that in moments where the rolling stem follows in one-way rotation with the central axis alone, will both the interior and the External wheels be compressed together to come to a common transmission.

4. The power recovery storage vessel according to claim 1, comprising a frictional clutch driven by the transmission wheel of the Main Axis, the shaft core of the rotation disk inside thereof being fitted to the central diaphragm of a closed enclosure, one end thereof provided with duct for passing to the admission manifold of the Engine, characteristic in that by the control by a solenoid valve overhead it will achieve in absorbing the diaphragm to carry the shaft core, or said as the mandrel rotation disk to secure a common rotation with rotation wheels through pressured contact, what with a mesh-in transmission between the notches on the interior dents and the exposed dent edges outside the shaft of the compressor as provided for the core of the rotation wheel, the compressor will release high pressure gases for storage in a vessel so as to produce therewith a pneumatic system with which to transmit mechanical transmission systems to achieve as a power source to activate Gear shifting operations.

5. The automatic electronic control system according to claim 1, comprising Engine rpm Detector, Travelling speed Detector, Accelerator depth Detector (Detector of acceleration by depth), Connectors, Gear Position Detector, Gear Range Detector, and an Instrumentation Panel, characteristic in the discharge of the control capacity according to the Flow Chart for the Microprocessor as covered thereby as given in Fig. 6.

6. The automatic electronic control system according to claim 5, the Gear Range Detector as covered thereby being fitted to the edge rim of the transmission disk which will discharge an eccentric deviation to set a Probing bar into rotation so that a Gear Range board as attached to the terminal end thereof will produce a displacement in accordance with the displacement by the transmission disk, that by way of the perforation holes as provided on specified positions on the Gear Range Board a specifically provided photo-sensor (photo-sensitive resistor) will become impressed with incoming lights such that the computation amplifier on sensing a change in input voltage, will release specific signals to the Microprocessor thereby keeping advised of the amplitude of deviation brought to the transmission disk accordingly all the times.

7. The Gear Range Detector according to claim 6, characteristic in that the probing bar thereof will pass across a hydraulic chamber and in the provision of a bumper board such that the probing bar will not resume to the startup point instantly under the elasticity due to a spring as provided in the hydraulic chamber when the transmission disk will part from the probing bar temporarily with respect to the edge thereof due to an eccentric rotation in progress by virtue of the checking force as produced by the hydraulic fluids against the bumper board.

8. The Acceleration depth Detector according to claim 5, as provided on the Link to the Accelerator, of pretty much the same structure and performances as does the Gear Range Board according to the statement of claim 6, including the photosensor, computation amplification circuit as well, characteristic in compelling the computation amplifier circuit to release signals corresponding to the impression of lights inflicted upon the photo-sensor to the Microprocessor through substitution of the hydraulic chamber with a spring so as to achieve in in an enhancement of the sensititivity effects produced.

9. The Engine rpm Detector and the travelling speed Detector according to claim 5, both installed to the Output transmission shaft that is a coaxially set rotation disk with lined up holes on the periphery, characteristic in the provision of a light emitter device as installed to a bar projecting from both

the upper and lower ends of the disk of which the fixing lever is fitted to the interior of the annular Exterior Shell, and of one set of photo-sensitive switch as a receiving device with which to detect both the Engine rpm and the travelling speeds by means of the receiving frequencies produced intermittently when concurred to in passing by the lined up holes as provided on the disk.

Fig. 1A

Fig. 1B

Fig. 2A

Fig. 2B

Fig. 3A

Fig. 3B

0130280

Fig. 4B

Fig. 4A

Fig. 5A

Fig. 5B

0130280

Fig. 6

Fig. 7A

Fig. 7B

Fig. 7C

52

51

5

512

54

50

511

5

53

Fig. 8

Fig. 9B

Fig. 9A

Fig. 9C